Europäisches Patentamt

European Patent Office

Office européen des brevets

(11) Veröffentlichungsnummer: **0 037 941**
**A2**

(12) # EUROPÄISCHE PATENTANMELDUNG

(21) Anmeldenummer: 81102324.1

(22) Anmeldetag: 27.03.81

(51) Int. Cl.³: **G 06 K 3/02, G 06 K 7/00**

(30) Priorität: 16.04.80 DE 3014491

(43) Veröffentlichungstag der Anmeldung: 21.10.81
Patentblatt 81/42

(84) Benannte Vertragsstaaten: **DE FR GB IT**

(71) Anmelder: **Kienzle Apparate GmbH,
Heinrich-Hertz-Strasse Postfach 1650,
D-7730 Villingen-Schwenningen (DE)**

(72) Erfinder: **Mendler, Dieter, Winterbergstrasse 30,
D-7742 St. Georgen (DE)**
Erfinder: **Dreher, Ernst, Taxusweg 1,
D-7730 VS-Rietheim (DE)**
Erfinder: **Röschmann, Holger, Schertlerstrasse 15,
D-7730 Villingen-Schwenningen (DE)**
Erfinder: **Schuler, Walter, Adlerring 44,
D-7730 Villingen-Schwenningen (DE)**

(54) **Belegcodiereinrichtung.**

(57) Die Erfindung bezieht sich auf einen Belegcodierer mit einer Lesestation zum Lesen von Markierungen.

Um die Zurückweisungsquote an «nicht lesbaren» Belegen zu reduzieren, sollen beim ersten Durchlauf nicht gelesene Belege mehrmals gelesen werden. Dazu werden die Belege beim Mehrfachlesen auf einer geschlossenen Bahn an dem Leser vorbeigeführt. Über eine Weiche wird die Bahn geöffnet, wenn die Lesung richtig erfolgt ist.

EP 0 037 941 A2

15.4.198o
o7o pa zw
Akte 1699

Kienzle Apparate GmbH, 7730 Villingen-Schwenningen

## Belegcodiereinrichtung

Die Erfindung bezieht sich auf eine Belegcodiereinrichtung, bestehend aus einer oder mehreren Belegeingabestationen für die Zuführung von Belegen, entweder von einem Stapel oder von Hand, einer Lesestation, einer Druck- bzw. Codierstation und einer oder mehreren Ablagestationen für die codierten Belege sowie einer Tastatur für die Eingabe von Daten, wobei die Belege vermittels Förderrollen oder -bändern in einem Transportkanal aus den Eingabestationen vorbei an der Lesestation in die Druckstation und weiter zur Ablagestation gefördert werden.

Bei den Kreditinstituten beispielsweise werden heute sog. Belegcodierer verwendet. Die von den Kunden auszufüllenden Schecks, Überweisungsaufträge oder dergl. sind hierfür an ihrem unteren Rande mit einer sog. Codierleiste versehen, in die bestimmte Daten in einer maschinell und visuell lesbaren Druckschrift eincodiert werden. Bei der Belegcodierung erfolgt bereits eine erste Erfassung der Daten des Beleges, wobei die Belege dann in dem Zentralcomputer der Bank weiterverarbeitet werden. Voraussetzung hierfür ist allerdings, daß jeder Beleg einwandfrei lesbare Daten trägt. Dies ist nicht immer sichergestellt, da insbesondere die Drucker hin-

0037941

sichtlich der Qualität des Druckes erhebliche Toleranzen aufweisen, die mit der Papierqualität, der Farbbandqualität, aber auch mit den Drucktypen zusammenhängen. Es läßt sich auch nicht immer ausschließen, daß durch Papierabrieb und dergl. Schmutz entsteht, der ebenfalls einen sauberen Abdruck verhindert. Andererseits müssen die Lesevorrichtungen für das automatische Lesen der Belege mit einem recht hohen Empfindlichkeitsgrad ausgestattet sein, wenn die geschriebenen Daten eindeutig gelesen werden sollen. Aus diesem Grunde ist die Zahl der vom Leser als nicht mit eindeutig identifizierbaren Daten versehenen Belege relativ hoch. Sie kann bis zu 3o % betragen.

Erfindungsgemäß wird nun von der Überlegung ausgegangen, daß bei einer Wiederholung des Lesevorganges ein beim ersten Durchlauf möglicherweise nicht identifizierbarer Beleg bei einem zweiten oder auch nochmaligen Passieren der Lesestation unter Umständen doch noch eindeutig identifiziert werden kann. Auf diese Art und Weise kann es möglich sein, die Zahl der als nicht lesbar zurückgewiesenen Belege auf die Hälfte zu reduzieren. Dies ist deswegen von besonderem Vorteil, weil für die zurückgewiesenen Belege von dem Bankpersonal ein Ersatzbeleg erstellt werden muß, was mit zusätzlichem Aufwand, insbesondere zusätzlicher Handarbeit, verbunden ist, da für diesen Ersatzbeleg sämtliche Daten frisch eingetastet und eingedruckt werden müssen.

Zur Lösung der gestellten Aufgabe wird erfindungsgemäß vorgeschlagen, im Transportkanal über eine Weiche eine Verzweigung derart vorzusehen, daß der Beleg in einer ersten Weichenstellung nach dem einmaligen Passieren der Lese- und Druckstation direkt in die Ablagestation befördert wird, während er in einer zweiten Weichenstellung in einer geschlossenen Bahn mehrfach an der Lesestation vorbeigeführt wird.

Bei einer speziellen Ausführungsform der Erfindung ist zwischen der Lesestation und der Druckstation noch eine Belegsichtstation angeordnet, die in Blickrichtung der Bedienungsperson hinter der Tastatur liegt, in der die Belege in der ersten Weichenstellung zuerst arretiert werden, um die visuelle Ablesung und Eintastung von Daten zu ermöglichen.

Im zweiten Schritt wird der Beleg dann in der ersten Weichenstellung in der Druck- bzw. Codierstation angehalten und durch eine Druckvorrichtung bedruckt bzw. codiert, die sich beim Druckvorgang relativ zum Beleg bewegt.

Wird jedoch beim Passieren der Lesestation festgestellt, daß der Beleg darauf bereits vorher codierte Daten trägt, die nicht lesbar sind, dann wird die Weiche in ihre zweite Position verschwenkt und der Beleg wird dann kontinuierlich auf der geschlossenen Bahn mehrfach, beispielsweise drei Mal, an der Lesestation vorbeigeführt. Nach dem dreimaligen Passieren der Lesestation gibt der Leser ein "gut"-Signal ab. In diesem Falle wird die Weiche in die erste Stellung zurückgeschwenkt, so daß der Beleg in die Ablagestation durchlaufen kann. Die Ablagestation umfaßt zwei Fächer, ein Fach für die "gut" gelesenen Belege, ein weiteres Fach für die "schlecht" gelesenen Belege, die über eine Weiche wahlweise angesteuert werden. Wurde beim dritten Passieren der Lesestation der Beleg für "schlecht" befunden, dann wird nicht nur die Weiche umgesteuert, die den Weg in die Ablagestation öffnet, sondern es wird auch innerhalb der Ablagestation eine weitere Weiche umgesteuert, die den Beleg in das Ablagefach für die nicht zu identifizierenden Belege einweist.

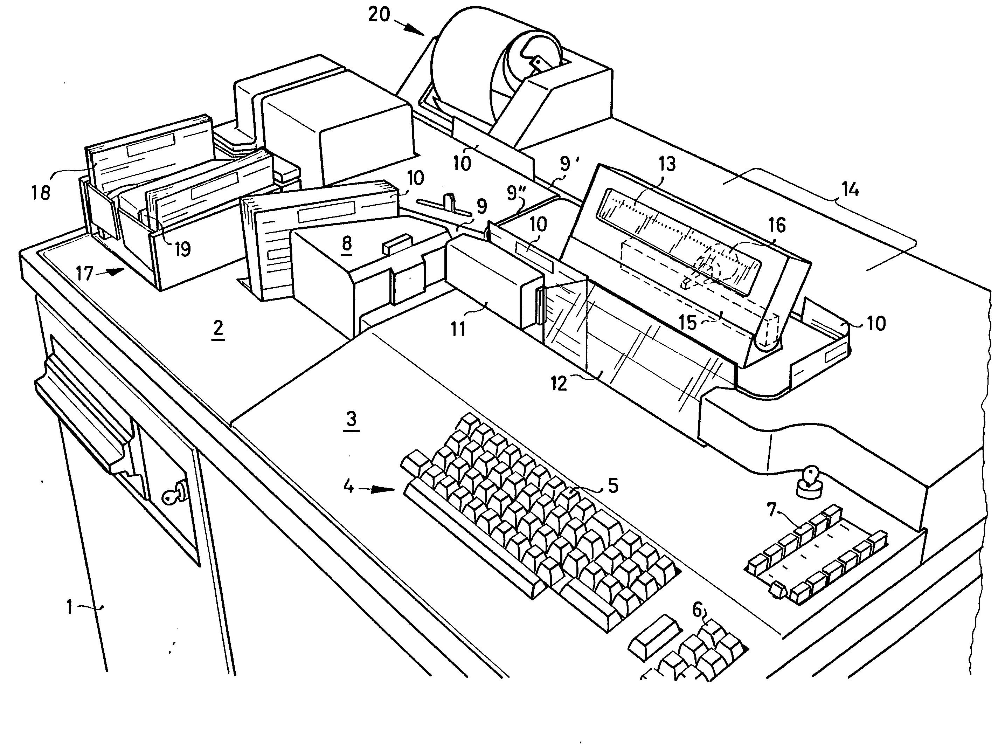

Die beiliegende Zeichnung zeigt eine Gesamtansicht der erfindungsgemäßen Belegcodiereinrichtung.

Auf einem Ständer 1 ist ein Tisch 2 mit einer Konsole 3 befestigt, in der eine Tastatur 4 angeordnet ist. Diese Tastatur umfaßt einerseits die sog. Alpha-Tasten 5 und andererseits numerische Tasten 6 sowie Funktionstasten 7.

Die Belegeingabestation 8 gestattet es, einen Stapel von Belegen einzulegen, die einzeln durch eine Transportvorrichtung abgezogen werden. Dabei gelangen die Belege in einen Transportkanal 9, in dem sie so geführt sind, daß sie teilweise aus dem Kanal herausragen. Man erkennt einen Beleg 1o in dem Transportkanal, der etwa zu einem Drittel aus diesem Kanal herausragt.

Der Transportkanal 9 verläuft an einer Lesestation 11 vorbei und führt den Beleg dann in eine Sichtstation 12. Diese Sichtstation 12 fluchtet in Blickrichtung der Bedienungsperson mit der Eingabetastatur 4. Dies hat zur Folge, daß dann, wenn der Beleg in der Sichtstation 12 arretiert ist, die Bedienungsperson auf dem Beleg aufgetragene handschriftliche Eintragungen, wie beispielsweise den Betrag des Schecks, visuell ablesen und mit Hilfe der Tastatur eingeben kann. Handelt es sich bei dem Beleg beispielsweise um eine Überweisung oder dergl., so wird auch die Kontonummer des Zahlungsempfängers und die Bankleitzahl der empfangenden Bank von dem Beleg abzulesen und manuell einzugeben sein.

Bei den Daten, die in der Lesestation 11 zu lesen sind, wird es sich in erster Linie um solche Daten handeln, die bereits vorcodiert sind, d.h. also um solche Daten, die in der Codierleiste des Beleges bereits vorhanden sind, wie beispielsweise die Beleg-Nummer, die Konto-Nummer des Kunden, der den Beleg ausgestellt hat, und auch die Bankleitzahl der Bank des Kunden. Diese Daten sind bereits in einem vorherigen Arbeitsgang in die Codierleiste eingetragen worden, beispielsweise die Belegnummer bereits beim Drucken der Belegformulare, die Konto-Nummer des Kunden und die Bankleitzahl vor der Ausgabe der Blanko-Formulare an den Kunden.

Wenn der Beleg dann, wie bereits erläutert, in der Belegsichtstation 12 anhält, können die den Beleg vervollständigenden Daten, die der Kunde eingetragen hat, von der Bedienungsperson abgelesen und mittels der Tastatur eingegeben werden. Alle Daten, also sowohl die von der Lesestation 11 gelesenen Daten, als auch die von Hand eingetasteten Daten, erscheinen dann auf einer Anzeige 13 in Form einer einzigen Zeile, die den Inhalt sämtlicher gelesener und eingetasteter Daten wiederzugeben gestattet.

Wenn die Eingabe der Daten abgeschlossen ist, wird von der Bedienungsperson eine Auslösetaste (Funktionstaste 7) betätigt, wodurch die Transportvorrichtung wieder in Gang gesetzt wird, und der Beleg 1o wandert in dem Transportkanal 9 um die Anzeigevorrichtung 13 herum und wird hinter dieser Anzeigevorrichtung wiederum in der Druck- bzw. Codierstation 14 angehalten. Gleichzeitig ist aber der nächste Beleg bereits von der Eingabestation 8 bis in die Belegsichtstation 12 gefördert worden, so daß ein kontinuierliches Arbeiten möglich ist. Während also die Daten des nächsten Beleges von der Bedienungsperson in der Belegsichtstation 12 abgelesen und eingetastet werden, werden gleichzeitig auf den vorher zugeführten Beleg in der Druckstation 14 mit Hilfe einer Druckunterlage 15 und eines Druckwerkes 16 die Daten aufgedruckt. Statt den Beleg 1o in der Druckstation 14 anzuhalten und das Druckwerk 16 zu bewegen, kann der Druck auch in der Bewegung des Beleges bei stillstehendem Druckwerk erfolgen.

Der Beleg erreicht dann innerhalb des Transportkanales 9 eine Position, in der eine Weiche angeordnet ist, die es erlaubt, den Beleg entweder in den Teil 9' des Transportkanales 9 zu leiten, oder aber in den Teil 9". In der ersten Stellung der Weiche wird der Beleg in den Teil 9' des Kanales gelenkt, in der zweiten Stellung der Weiche in den Teil 9". Der Teil 9" des Transportkanales schließt den Transportkanal zu einer geschlossenen Bahn zusammen, so daß der Beleg über den Teil 9" des Transportkanales zurück zur Lesevorrichtung 11, zur Belegsichtstation 12 und von da wiederum zur Druckstation 14 geführt werden kann. Die Weiche, die den Beleg entsprechend umsteuert, wird ihrerseits beeinflußt vom Ergebnis des Lesevorganges in der Lesevorrichtung 11. Hat die Lesevorrichtung den Beleg für "gut" befunden, dann bleibt die Weiche in ihrer ersten Stellung. Der Beleg wandert durch den Teil 9', wird nochmals im rechten Winkel umgelenkt und der Ablagestation 17 zugeführt. Diese Ablagestation 17 umfaßt eine weitere Weiche, die es ermöglicht, den Beleg entweder in den Behälter 18 oder in den Behälter 19 einzuführen. Die Belege werden auf jeden Fall den Behältern 18 und 19 so zugeführt, daß sie in der Reihenfolge ihrer Verarbeitung abgelegt werden, also mit dem ersten verarbeiteten Beleg an erster Stelle, mit dem letzten verarbeiteten Beleg an letzter Stelle. Das Ablagefach 18 ist dafür vorgesehen, die für "gut" befundenen Belege aufzunehmen, das Ablagefach 19 nimmt die nicht lesbaren Belege auf, also die "schlechten".

Hat ein Beleg 1o die Lesestation 11 zum ersten Mal passiert und wurde in der Belegsichtstation 12 angehalten und hier vervollständigt, wurde aber von der Lesestation 11 erkannt, daß die bereits auf dem Beleg befindlichen Daten zum Teil nicht identifizierbar sind, dann wird die Weiche zwischen den Teilen 9' und 9" des Transportkanales 9 so verschwenkt, daß der Beleg in den Teil 9" gelenkt wird. Damit passiert der Beleg die Lesestation 11 ein zweites Mal und gegebenenfalls noch ein drittes Mal. Wird in beiden Fällen festgestellt, daß die aufgedruckten Daten nicht identifizierbar sind, dann wird die Weiche zwischen den Teilen 9', 9" des Transportkanales 9 verschwenkt, so daß der Beleg 1o nunmehr in die Ablagestation 17 befördert wird. Hierbei wurde vorher aber die Weiche an der Ablagestation 17 so verschwenkt, daß der Beleg in den Ablagebehälter 19 für die "schlechten" Belege wandert.

Wurden dagegen beim zweiten oder dritten Umlauf des Beleges 1o in der geschlossenen Bahn des Transportkanales 9, 9" die Daten richtig identifiziert, dann wird zwar die Weiche zwischen den Teilen 9' und 9" des Transportkanales zurückge-

0037941

schwenkt in die erste Stellung, die Weiche an der Ablagestation 17 wird jedoch nicht verschwenkt, und der Beleg wandert in den Ablagebehälter 18 für die "guten" Belege.

Es sei noch darauf hingewiesen, daß der Belegcodierer zusätzlich eine Journalrolle 2o besitzt, die mittels eines nicht gezeigten Journaldruckers mit sämtlichen Daten bedruckt wird, die entweder in der Lesestation 11 gelesen oder aber über die Tastatur 4 eingegeben worden sind.

Kienzle Apparate GmbH, 7730 Villingen-Schwenningen

Belegcodiereinrichtung

Patentansprüche:

1. Belegcodiereinrichtung bestehend aus einer oder mehreren Belegeingabestationen für die Zuführung von Belegen, entweder von einem Stapel oder von Hand, einer Lesestation, einer Druck- bzw. Codierstation und einer oder mehreren Ablagestationen für die codierten Belege sowie einer Tastatur für die Eingabe von Daten, wobei die Belege vermittels Förderrollen in einem Transportkanal aus den Eingabestationen vorbei an der Lesestation in die Druckstation und weiter zur Ablagestation gefördert werden, dadurch gekennzeichnet, daß im Transportkanal (9) über eine Weiche eine Verzweigung derart vorgesehen ist, daß der Beleg (1o) in der ersten Weichenstellung nach dem einmaligen Passieren der Lese- (11) und Druckstation (14) direkt in die Ablagestation (17) gefördert wird, während er in der zweiten Weichenstellung in einer geschlossenen Bahn (9, 9") mehrfach an der Lesestation (11) vorbeigeführt wird.

2. Einrichtung nach Anspruch 1, dadurch gekennzeichnet, daß zwischen der Lesestation (11) und der Druckstation (14) in Blickrichtung der Bedienungsperson hinter der Eingabetastatur (4) eine Belegsichtstation (12) angeordnet ist, in der die Belege (1o) in der ersten Weichenstellung zuerst arretiert werden, um die visuelle Ablesung und Eintastung von Daten zu ermöglichen.

3. Einrichtung nach Anspruch 1, dadurch gekennzeichnet, daß zwei Ablagebehälter (18, 19) vorhanden sind, von denen die eine (18) die richtig gelesenen Belege aufnimmt, während die andere (19) über eine Weiche dann angesteuert wird, wenn ein Beleg (1o) auch nach mehrmaligem Passieren der Lesestation (11) irgendwelche nicht einwandfrei identifizierbare Daten trägt.